# EUROPEAN PATENT APPLICATION

(11) **EP 4 530 366 A1**
(43) Date of publication of application: **02.04.2025**
(21) Application number: 23939026.3
(22) Date of filing: 08.06.2023
(51) Int. Cl.: C22C 38/02, C22C 38/04, C22C 38/06, C22C 38/12, C21D 8/06

(54) **WIRE ROD FOR FINE STEEL WIRE CORD, STEEL WIRE, CORD, AND MANUFACTURING METHOD THEREFOR**

(30) Priority: 30.05.2023 CN 202310632324
(71) Applicant: Angang Steel Company Limited, Anshan, Liaoning 114003 (CN)
(72) Inventor: GUO, Dayong, Anshan, Liaoning 114021 (CN); CHE, An, Anshan, Liaoning 114021 (CN); LI, Kai, Anshan, Liaoning 114021 (CN); GAO, Hang, Anshan, Liaoning 114021 (CN); WANG, Ning, Anshan, Liaoning 114021 (CN); LIU, Leigang, Anshan, Liaoning 114021 (CN); YANG, Yingqiang, Anshan, Liaoning 114021 (CN); ZHANG, Haoxing, Anshan, Liaoning 114021 (CN); WANG, Hongliang, Anshan, Liaoning 114021 (CN); ZHANG, Bo, Anshan, Liaoning 114021 (CN)
(74) Representative: Murgitroyd & Company
(86) International application number: PCT/CN2023/099163
(87) International publication number: WO 2024/244042

(57) **Abstract**

The present invention belongs to the technical field of production method for wire rods, in particular relates to a wire rod for fine steel wire cord, steel wire, cord, and manufacturing methods therefor. The wire rod includes chemical components in percentage by mass: 0.79%-0.84% of C, 0.15%-0.30% of Si, 0.45%-0.55% of Mn, less than or equal to 0.015% of P, 0.0030%-0.010% of S, 0.0008%-0.0022% of total oxygen, 0.0002%-0.0012% of Als, 0.0002%-0.0012% of Mg, 0.0003%-0.0009% of Nb, 0.0003%-0.0012% of Mo, and balance of Fe and inevitable impurities. According to the present invention, the hardness distribution of cross-section of each the wire rod and the steel wire is homogeneous through designs of chemical component and production process, meeting users' requirements for plying performance in machining process from wire rod to fine steel cord.

## Description

### TECHNICAL FIELD

The present invention belongs to the technical field of manufacturing method for wire rods, and specifically relates to a wire rod for a fine steel wire cord, a steel wire, a cord, and manufacturing methods therefor.

### BACKGROUND

Cord steel wire rods are used for the production and manufacture of tire steel wire cords. Wire rods are processed by means of drawing and plying in users' use process, so that the users have strict requirements on the processing performance of wire rods. Microstructural hardness distribution of wire rod is an important index affecting the processing performance of wire rod. Microstructural hardness of wire rod is a comprehensive reflection of chemical component and microstructural state, and the change of structural hardness in the cross-section of wire rod directly reflects a homogeneous deformation capability in the cross-section of wire rod. A homogeneous hardness distribution in the cross-section of wire rod is beneficial to improving the homogeneity of structural hardness in the cross-section of steel wire, thereby improving a plying performance of steel wire and creating a condition for manufacturing fine steel wire cord with complex and harsh structure.

Patent CN201910638740.0 discloses an ultra-fine ultra-high strength steel wire, a wire rod for the ultra-fine ultra-high strength steel wire and a production method therefor. The wire rod for the ultra-fine ultra-high strength steel wire includes components in percentage by mass: 0.90%-0.96% of C, 0.12%-0.30% of Si, 0.30%-0.65% of Mn, 0.10%-0.30% of Cr, less than or equal to 0.004% of Al, less than or equal to 0.001% of Ti, less than or equal to 0.01% of Cu, less than or equal to 0.01% Ni, less than or equal to 0.01% of S, less than or equal to 0.01% of P, less than or equal to 0.0006% of O, less than or equal to 0.0006% of N, and the balance being Fe and inevitable impurity elements, wherein the size of inclusions is less than or equal to 4 µm, and the average density of brittle inclusions is less than or equal to 2/mm². The wire rod for the ultra-fine ultra-high strength steel wire can be used as a base material for preparing ultra-fine ultra-high strength steel wires with a diameter of 50-60 µm and a tensile strength greater than or equal to 4500 MPa, which can achieve a continuous wire mileage to be greater than or equal to 300 km in the process of drawing to prepare the ultra-fine ultra-high strength steel wire. Its production method includes vacuum induction melting, remelting, forging, and steel rolling. This patent focuses on an ultra-fine ultra-high strength steel wire, a wire rod for the ultra-fine ultra-high strength steel wire and a production method therefor. The said wire rod is applied to the production of ultra-fine steel wires, which does not mention the plying performance of the steel wire and also does not mention the cross-sectional hardness distribution of the wire rod and the steel wire.

In order to meet users' requirements for processing performance of wire rods for precision steel wire cords, especially for the requirements for plying performance in preparing steel wire from wire rod, it is urgent to develop a high-quality precision wire rod for steel wire cord to make the hardness distribution of cross-section of wire rod homogeneous, and make the hardness distribution of cross-section of steel wire prepared from the wire rod homogeneous also, laying a foundation for improving the plying performance of steel wire.

### SUMMARY

An objective of the present invention is to provide a wire rod for fine steel wire cord, a steel wire, a cord, and manufacturing methods therefor. Through designs of chemical component and production process, the hardness distribution of cross-section of each the wire rod and the steel wire is homogeneous, meeting users' requirements for plying performance in machining process from wire rod to fine steel cord.

In order to realize the above objective, the present invention adopts the following technical solutions:
A first aspect of the present invention provides a wire rod for fine steel wire cord, including the following chemical components in percentage by mass:
0.79%-0.84% of C, 0.15%-0.30% of Si, 0.45%-0.55% of Mn, less than or equal to 0.015% of P, 0.0030%-0.010% of S, 0.0008%-0.0022% of total oxygen, 0.0002%-0.0012% of Als, 0.0002%-0.0012% of Mg, 0.0003%-0.0009% of Nb, 0.0003%-0.0012% of Mo, and balance of Fe and inevitable impurities.

In the above technical solution, further, a Si content of ferrite in a pearlite structure of the wire rod is 0.15%-0.45%.

Selection principles and content design reasons of each chemical component in the present invention are as follows:
C: C is the main element to control the strength of steel wire. A too low C content cannot meet users' strength requirements for steel wire, and an excessive C content will cause the strength of steel wire to exceed users' requirements. At the same time, a higher C content will lead to an increase in the breaking rate of steel wire in the drawing process, causing an increase of scrap rate. Therefore, the C content in the present invention is controlled to be 0.79%-0.84%.
Si: Si is the main deoxidizing element in high carbon steel. A low Si content will result in insufficient deoxidation of liquid steel. An excessive Si content in steel will cause coarse silicate inclusions in steel, which will reduce the drawing performance of steel wire. Element Si solutionized in the ferrite can increase the hardness of ferrite, reduce the difference in hardness between ferrite and cementite, and improve the homogeneity of microstructural hardness of steel wire. Therefore, the Si content in the present invention is controlled to be 0.15%- 0.30%.
Mn: Mn is an element for improving the strength of wire rod, making the steel wire meets users' requirements for tensile strength. Element Mn can reduce the eutectoid transition temperature of steel, refine the pearlite structure of steel wire, and improve the deep processing capability of steel wire. Therefore, the Mn content in the present invention is controlled to be 0.45%-0.55%.
P: P is prone to banding segregation in wire rod, which reduces the mechanical processing capability of steel wire. Therefore, the P content in the present invention is controlled to less than or equal to 0.015%.
S: A higher S content in steel will reduce the cold working performance of steel wire. Since MnS inclusions have good deformability, a proper amount of S in steel can play a role in reducing the harm of non-deformed inclusions in steel and prevent the occurrence of microcracks caused by the inclusions. Therefore, the S content in the present invention is controlled to be 0.0030%-0.010%.

Total oxygen: When the O content is higher, the size and quantity of inclusions in steel will be large, which is easy to cause the occurrence of microcracks in the machining process of steel wire and result in steel wire cracking. When the O content is lower, the deformability of inclusions in steel wire will be poor, making microcracks easy to appear between the inclusions and the steel wire matrix, which is not conducive to the improvement of the machining performance of steel wire. Therefore, the total oxygen content of the steel wire in the present invention is controlled to be 0.0008%-0.0022%.

Als: When the Als content is higher, the size of Al₂O₃ inclusions in steel will be large, which is easy to cause steel wire cracking during processing. When the Als content in the wire rod is too low, the melting point of inclusions in steel will be high, the deformability of inclusions will be reduced, the local stress of steel wire in machining process will be increased, and the steel wire is prone to microcracks, resulting in cracking and breakage of steel wire. Therefore, the Als content in the present invention is controlled to be 0.0002%-0.0012%.

Mg: Element Mg may control the O content and the inclusion type in steel. A higher Mg content will cause magnesium-aluminate spinel inclusions in steel, which reduces the processability of steel wire. Appropriate Mg content in steel may improve the deformability of inclusions and expand the area with higher deformability of inclusions, which is beneficial to improve the deformability of steel wire. Therefore, the Mg content in the present invention is controlled to be 0.0002%-0.0012%.

Nb: Element Nb can inhibit the grain growth of billet steel when the billet steel is heated, thereby improving the homogeneity of structural hardness of steel wire. However, an excessive Nb content in steel will make the work-hardening of wire rod in the deformation process remarkable and decrease the deep processability of wire rod. Therefore, the Nb content in the present invention is controlled to be 0.0003%-0.0009%.

Mo: Element Mo is a strong carbide forming element. Through dispersed distribution of molybdenum carbide, steel wire grains may be refined and the homogeneity of hardness distribution of cross-section of steel wire is improved. However, an excessive Mo content in steel will reduce the machining performance of wire rod. Therefore, the Mo content in the present invention is controlled to be 0.0003%-0.0012%.

A second aspect of the present invention provides a method for manufacturing the aforementioned wire rod for fine steel wire cord, including the steps as follows:
(1) Continuous casting: Continuous casting a smelted liquid steel, and obtaining a continuous casting billet having a cross-section size of (250-300) mm×(350-400) mm, a surface grain size of 260-520 µm, a core grain size of 800-1100 µm, a carbon segregation index at a one half thickness position on a midline of a length of the cross-section controlled to be 0.95-1.07, a carbon segregation index at a one forth thickness position on the midline of the length of the cross-section controlled to be 0.96-1.06, and a carbon segregation index at a surface position on the midline of the length of the cross-section controlled to be 0.94-1.0;
(2) Heating and rolling: Performing hot charging to the continuous casting billet in a furnace, wherein a total time in furnace is 3.8-4.5 hours, a temperature of soaking zone is 1230-1280 °C, a holding time of soaking zone is 40-60 minutes, and continuously rolling the heated continuous casting billet into a bloom, wherein a final rolling temperature of continuous rolling is 940-1050 °C, and a cross-section size of the bloom is (140-180) mm×(140-180) mm;
(3) Wire rod rolling: Heating the bloom in a furnace with a total time in furnace of the bloom of 150-170 minutes, a temperature of soaking zone of 1130-1170 °C, and a holding time of soaking zone of 30-50 minutes, which may reduce the segregation of C, Mn and other elements and control the grain size of the bloom through high-temperature diffusion of the bloom; and then performing rough rolling, intermediate rolling, pre-finish rolling, finish rolling, dual-module rolling, and wire rod spinning to the heated bloom, wherein a rolling specification of the wire rod is 5.0-6.0 mm; and
(4) Wire rod cooling: Cooling the wire rod on an air-cooling roller after spinning, wherein a cementite initial precipitation temperature of the wire rod is controlled to be 740-770 °C, a pearlite phase transition supercooling degree of the wire rod is controlled to be 100-150 °C, a pearlite content of the wire rod is larger than or equal to 50% when a phase transition time on the air-cooling roller is 4-6 seconds, and the pearlite content of that is larger than or equal to 95% when the phase transition time is 14-16 seconds. A final wire rod after cooling is mainly composed of sorbite structure, which is conducive to users for steel wire drawing.

In the above technical solution, further, in step (1), the liquid steel is melted iron and scrap steel, in which the scrap steel accounts for 5%-10% of the liquid steel by mass.

In the above technical solution, further, in step (1), the liquid steel is subjected to refining treatment with a LF furnace after converter smelting. A refining time in LF furnace is 30-50 minutes, a refining temperature is 1450-1550 °C, and the refining process of the liquid steel is provided with argon stirring with an argon flow of 200-500 NL/min.

In the above technical solution, further, in step (3), a temperature of a rolled bloom coming out of the pre-finish rolling is 950-1000 °C, and a temperature compensated deformation rate factor of the rolled bloom of the final pass of pre-finish rolling is (1.1-2.6)*10¹³s⁻¹; a temperature of a rolled bloom entering the finish rolling is 880-960 °C, and a temperature compensated deformation rate factor of the rolled bloom of the final pass of finish rolling is (1.6-3.2)*10¹⁴s⁻¹; and a temperature of a rolled bloom entering the dual-module rolling is 890-940 °C, and a temperature compensated deformation rate factor of the rolled bloom of the final pass of dual-module rolling is (4.5-9.9)*10¹⁴s¹.

In the above technical solution, further, in step (3), a wire rod spinning temperature is 910-940 °C. A higher wire rod spinning temperature may improve the cooling speed of the wire rod on the air-cooling roller, laying a foundation for controlling the final structure of the wire rod.

A third aspect of the present invention provides a fine steel wire manufactured by using the aforementioned wire rod.

A fourth aspect of the present invention provides a method for manufacturing the above fine steel wire, including the following steps of:
a. Mechanical descaling: Performing mechanical descaling treatment to the wire rod, wherein a residual rate of iron oxide scale on a surface of the wire rod is less than or equal to 0.07%.
b. Wire rod drawing: Drawing the wire rod into an intermediate wire with a diameter of 0.8 -1.2 mm through multiple passes.
c. Intermediate wire heat treatment: Heating the intermediate wire to 880-915 °C, and then cooling the intermediate wire to 555-575 °C for phase transformation.
d. Steel wire drawing: Drawing the intermediate wire after heat treatment into steel wire with a diameter of 0.15 -0.20 mm.

A fifth aspect of the present invention provides a fine cord manufactured by using the above fine steel wire.

### Beneficial effects of the present invention are as follows:

Through designs of chemical component and production process, the hardness distribution of cross-section of each the wire rod and the steel wire is homogeneous, meeting users' requirements for plying performance in machining process from wire rod to fine steel cord. The hardness difference of different parts of the cross-section of 5.5 mm diameter wire rod is controlled within 35 HV, the hardness difference of the cross-section of 0.175 mm diameter steel wire is controlled within 10 HV, meeting users' quality requirements for steel wire production and steel wire cord production.

### DETAILED DESCRIPTION OF DRAWINGS

FIG. 1 is a schematic diagram of hardness test of cross-section of wire rod.
FIG. 2 is a schematic diagram of hardness test of cross-section of steel wire.

### DETAILED DESCRIPTIONS OF THE EMBODIMENTS

To make the objectives, technical solutions, and advantages of the present invention clearer, the following clearly and completely describes the technical solutions in the embodiments of the present invention. Apparently, the described embodiments are merely some rather than all of the embodiments. Based on the embodiments of the present invention, all the other embodiments obtained by those of ordinary skill in the art without inventive effort are within the protection scope of the present invention.

The chemical components of Examples 1 to 6 of the present invention are shown in Table 1.

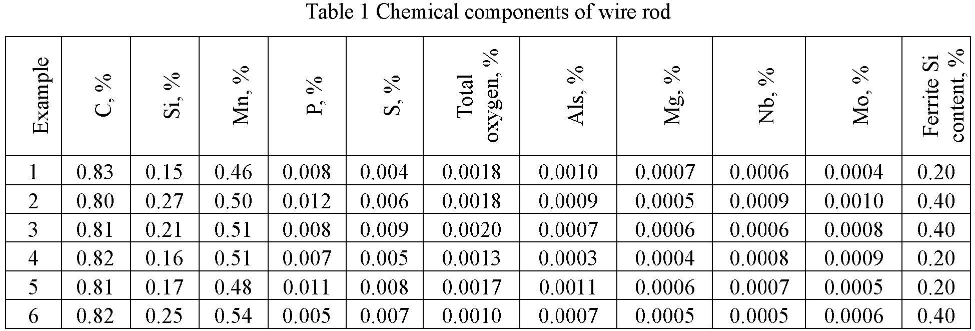

The above wire rods for the fine steel wire cord were manufactured by the following steps:
(1) Smelting: The liquid steel including melted iron and scrap steel, and the scrap steel accounting for 5%-10% of the liquid steel by mass; converter smelting the liquid steel and then refining it using a LF furnace, wherein a refining time in LF furnace is 30-50 minutes, a refining temperature is 1450-1550 °C, and the refining process of the liquid steel is provided with argon stirring with an argon flow of 200-500 NL/min.

**Table 2 Process parameters of smelting**

| Example | Refining time in LF furnace, min | Refining temperature, °C | Argon flow, NL/min |
|---|---|---|---|
| 1 | 35 | 1512 | 300 |
| 2 | 49 | 1531 | 250 |
| 3 | 42 | 1532 | 350 |
| 4 | 38 | 1509 | 400 |
| 5 | 45 | 1523 | 300 |
| 6 | 41 | 1541 | 350 |

(2) Continuous casting: Continuous casting the smelted liquid, and obtaining a continuous casting billet having a cross-section size of (250-300) mm*(350-400) mm, a surface grain size of 260-520 µm, a core grain size of 800-1100 µm, a carbon segregation index at a one half thickness position on a midline of a length of the cross-section controlled to be 0.95-1.07, a carbon segregation index at a one forth thickness position on the midline of the length of the cross-section controlled to be 0.96-1.06, and the carbon segregation index at a surface position on the midline of the length of the cross-section controlled to be 0.94-1.0.

**Table 3 Process parameters of continuous casting**

| Example | Cross-section size of continuous casting billet, mm² | Surface grain size of continuous casting billet, µm | Core grain size of continuous casting billet, µm | Carbon segregation index at the core of continuous casting billet | Carbon segregation index at the one forth thickness position of continuous casting billet | Carbon segregation index at the surface position of continuous casting billet |
|---|---|---|---|---|---|---|
| 1 | 280*380 | 260~520 | 800~1100 | 1.04 | 1.06 | 0.97 |
| 2 | 280*380 | 260~520 | 800~1100 | 1.06 | 0.99 | 0.97 |
| 3 | 280*380 | 260~520 | 800~1100 | 0.98 | 1.01 | 0.96 |
| 4 | 280*380 | 260~520 | 800~1100 | 0.97 | 1.04 | 0.99 |
| 5 | 280*380 | 260~520 | 800~1100 | 1.01 | 1.02 | 0.98 |
| 6 | 280*380 | 260~520 | 800~1100 | 1.05 | 1.03 | 0.96 |

(3) Heating and rolling: Performing hot charging to the continuous casting billet in a furnace, wherein a total time in furnace is 3.8-4.5 hours, a temperature of soaking zone is 1230-1280 °C, and a holding time of soaking zone is 40-60 minutes; and then continuously rolling the heated continuous casting billet into a bloom, wherein a final rolling temperature of continuous rolling is 940-1050 °C, and a cross-section size of the bloom is (140-180) mm*(140-180) mm.

**Table 4 Process parameters of heating and rolling**

| Example | Total time in furnace of continuous casting billet, h | Holding temperature of soaking zone of continuous casting billet, °C | Holding time of soaking zone of continuous casting billet, min | Final rolling temperature of continuous rolling, °C | Cross-section size of bloom, mm² |
|---|---|---|---|---|---|
| 1 | 3.9 | 1237 | 43 | 954 | 160*160 |
| 2 | 4.2 | 1262 | 48 | 959 | 160*160 |
| 3 | 4.1 | 1247 | 44 | 973 | 160*160 |
| 4 | 3.8 | 1252 | 42 | 965 | 160*160 |
| 5 | 4.3 | 1237 | 42 | 968 | 160*160 |
| 6 | 4.2 | 1238 | 46 | 979 | 160*160 |

(4) Wire rod rolling: Heating the bloom in a furnace with a total time in furnace of 150-170 minutes, a temperature of soaking zone of 1130-1170 °C, and a holding time of soaking zone of 30-50 minutes, which can reduce the segregation of C, Mn and other elements and control the grain size of bloom through high-temperature diffusion of the bloom; and performing rough rolling, intermediate rolling, pre-finish rolling, finish rolling and dual-module rolling to the heated bloom, wherein a temperature of a rolled bloom coming out of the pre-finish rolling is 950-1000 °C and a temperature compensated deformation rate factor of the rolled bloom of the final pass of pre-finish rolling is (1.1-2.6)*10¹³ s⁻¹, and a temperature of a rolled bloom entering the finish rolling is 880-960°C and a temperature compensated deformation rate factor of the rolled bloom of the final pass of finish rolling is (1.6-3.2)*10¹⁴s⁻¹, and a temperature of a rolled bloom entering the dual-module rolling is 890-940 °C, and a temperature compensated deformation rate factor of the rolled bloom of the final pass of dual-module rolling is (4.5-9.9)*10¹⁴s¹; and then, performing wire rod spinning to the rolled bloom with a spinning temperature of 910-940 °C, which can improve the cooling speed of wire rod on the air-cooling roller through a higher wire rod spinning temperature, laying a foundation for controlling the final structure of the wire rod, wherein the rolling specification of the wire rod is 5.0-6.0 mm.

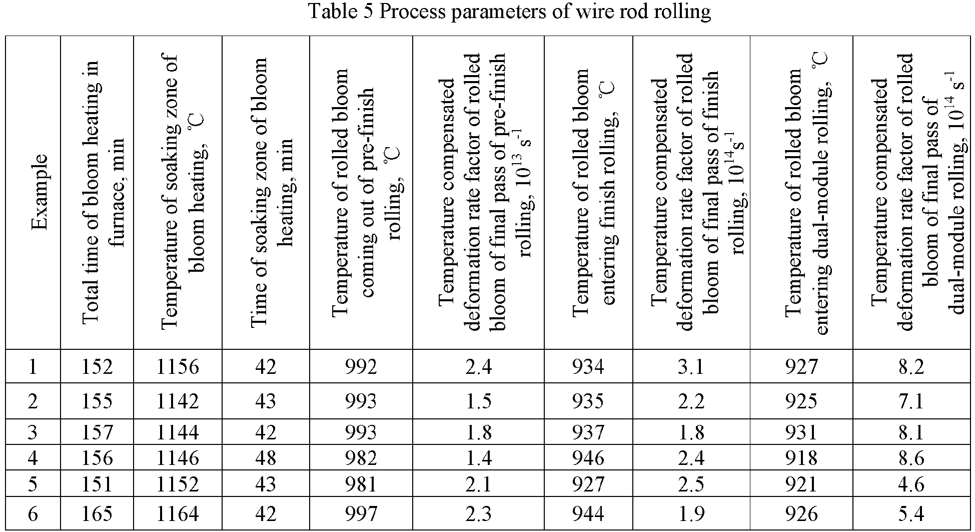

**Table 6 Process parameters of wire rod spinning**

| Example | Wire rod spinning temperature, °C | Wire rod specification, mm |
|---|---|---|
| 1 | 937 | 5.5 |
| 2 | 925 | 5.5 |
| 3 | 922 | 5.5 |
| 4 | 921 | 5.5 |
| 5 | 915 | 5.5 |
| 6 | 916 | 5.5 |

(5) Wire rod cooling: Cooling the wire rod on an air-cooling roller after spinning,, wherein a cementite initial precipitation temperature of the wire rod is controlled to be 740-770 °C, a pearlite phase transition supercooling degree of the wire rod is controlled to be 100-150°C, a pearlite content of the wire rod is larger than or equal to 50% when a phase transition time on the air-cooling roller is 4-6 seconds, and the pearlite content of that is larger than or equal to 95% when the phase transition time is 14-16 seconds. A final wire rod after cooling is mainly composed of sorbite structure, which is conducive to users for steel wire drawing.

**Table 7 Process parameters of wire rod cooling**

| Example | Precipitation temperature of cementite,°C | Phase transition supercooling degree, °C | Pearlite content of wire rod when phase transition time is 4-6 seconds, % | Pearlite content of wire rod when phase transition time is 14-16 seconds, % |
|---|---|---|---|---|
| 1 | 740~760 | 127 | 60 | 95 |
| 2 | 750~770 | 109 | 55 | 95 |
| 3 | 740~760 | 132 | 60 | 95 |
| 4 | 750~770 | 114 | 65 | 100 |
| 5 | 750~770 | 117 | 60 | 95 |
| 6 | 740~760 | 126 | 55 | 95 |

The method for manufacturing the fine steel wire using the aforementioned wire rod includes the following steps of:
a. Mechanical descaling: Performing mechanical descaling treatment to the wire rod, wherein a residual rate of iron oxide scale on a surface of the wire rod is less than or equal to 0.07%;
b. Wire rod drawing: Drawing the wire rod into an intermediate wire with a diameter of 0.8-1.2 mm through multiple passes;
c. Intermediate wire heat treatment: Heating the intermediate wire to 880-915 °C, and then cooling the intermediate wire to 555-575°C for phase transition;
d. Steel wire drawing: Drawing the intermediate wire after heat treatment into a steel wire with a diameter of 0.15-0.20 mm.

**Table 8 Process parameters of steel wire manufacturing**

| Example | Diameter of intermediate wire, mm | Heating temperature of steel wire, °C | Phase transition temperature, °C | Final steel wire diameter, mm |
|---|---|---|---|---|
| 1 | 1.0 | 903 | 562 | 0.175 |
| 2 | 1.0 | 902 | 568 | 0.175 |
| 3 | 1.0 | 905 | 571 | 0.175 |
| 4 | 1.0 | 902 | 567 | 0.175 |
| 5 | 1.0 | 901 | 563 | 0.175 |
| 6 | 1.0 | 902 | 559 | 0.175 |

The wire rods and steel wires obtained in the above Examples1 to 6 were tested for hardness.

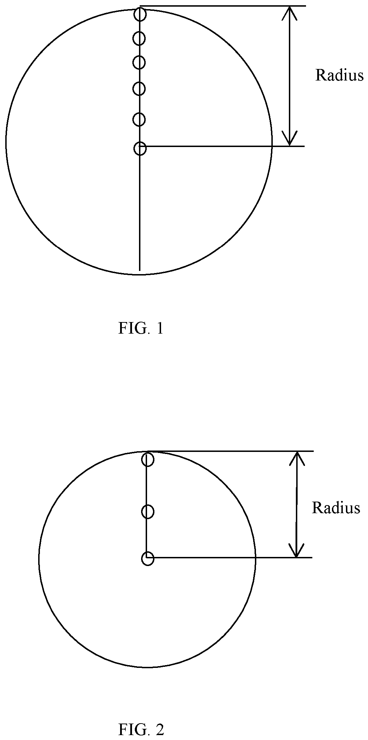

Test method for hardness of wire rod: Dividing the radius of cross-section of wire rod into five equal parts, testing the hardness at each of the 6 points from the surface to the core, and then analyzing the hardness differences of the cross-section, which is shown in FIG. 1.

Test method for hardness of steel wire: Dividing the radius of cross-section of wire rod into two equal parts, testing the hardness at each of the 3 points from the surface to the core, and then analyzing the hardness differences of the cross-section, which is shown in FIG. 2.

The test results are shown in Table 9.

**Table 9 Hardness differences of cross-sections of wire rod (HV1) and steel wire (HV0.2)**

| Example | Wire rod | Steel wire |
|---|---|---|
| 1 | 14.9 | 2 |
| 2 | 8.9 | 4 |
| 3 | 32.1 | 8 |
| 4 | 12 | 2 |
| 5 | 28.3 | 2 |
| 6 | 15.8 | 3 |

The above examples are only preferred embodiments of the present invention, and are not limitations on embodiments. The protection scope of the present invention shall be subject to the scope defined by the claims. On the basis of the above description, other changes or variations in different forms can be also made. Obvious changes or variations derived therefrom remain within the protection scope of the present invention.

## Claims

1. A wire rod for fine steel wire cord, comprising the following chemical components in percentage by mass: 0.79%-0.84% of C, 0.15%-0.30% of Si, 0.45%-0.55% of Mn, less than or equal to 0.015% of P, 0.0030%-0.010% of S, 0.0008%-0.0022% of total oxygen, 0.0002%-0.0012% of Als, 0.0002%-0.0012% of Mg, 0.0003%-0.0009% of Nb, 0.0003%-0.0012% of Mo, and balance of Fe and inevitable impurities.

2. The wire rod for fine steel wire cord according to claim 1, wherein a Si content of ferrite in a pearlite structure of the wire rod is 0.15%-0.45%.

3. A method for manufacturing the wire rod for fine steel wire cord according to any one of claims 1 to 2, comprising the following steps of:
(1) continuous casting: continuous casting a smelted liquid steel, and obtaining a continuous casting billet having a cross-section size of (250-300) mm×(350-400) mm, a surface grain size of 260-520 µm, a core grain size of 800-1100 µm, a carbon segregation index at a one half thickness position on a midline of a length of the cross-section controlled to be 0.95-1.07, a carbon segregation index at a one forth thickness position on the midline of the length of the cross-section controlled to be 0.96-1.06, and a carbon segregation index at a surface position on the midline of the length of the cross-section controlled to be 0.94-1.0;
(2) heating and rolling: performing hot charging to the continuous casting billet in furnace, wherein a total time in furnace is 3.8-4.5 hours, a temperature of soaking zone is 1230-1280 °C, a holding time of soaking zone is 40-60 minutes, and continuously rolling the heated continuous casting billet into a bloom, wherein a final rolling temperature of continuous rolling is 940-1050 °C, and a cross-section size of the bloom is (140-180) mm×(140-180) mm;
(3) wire rod rolling: heating the bloom in a furnace with a total time in furnace of the bloom of 150-170 minutes, a temperature of soaking zone of 1130-1170 °C, and a holding time of soaking zone of 30-50 minutes, and performing rough rolling, intermediate rolling, pre-finish rolling, finish rolling, dual-module rolling, and wire rod spinning to the heated bloom, wherein a rolling specification of the wire rod is 5.0-6.0 mm; and
(4) wire rod cooling: cooling the wire rod on an air-cooling roller after spinning, wherein a cementite initial precipitation temperature of the wire rod is controlled to be 740-770 °C, a pearlite phase transition supercooling degree of the wire rod is controlled to be 100-150 °C, a pearlite content of the wire rod is larger than or equal to 50% when a phase transition time on the air-cooling roller is 4-6 seconds, and the pearlite content of that is larger than or equal to 95% when the phase transition time is 14-16 seconds.

4. The manufacturing method according to claim 3, wherein in step (1), the liquid steel is melted iron and scrap steel, wherein the scrap steel accounts for 5%-10% of the liquid steel by mass.

5. The manufacturing method according to claim 3, wherein in step (1), the liquid steel is subjected to refining treatment with a LF furnace after converter smelting, wherein a refining time in LF furnace is 30-50 minutes, a refining temperature is 1450-1550 °C, and the refining process of the liquid steel is provided with argon stirring with an argon flow of 200-500 NL/min.

6. The manufacturing method according to claim 3, wherein in step (3), a temperature of a rolled bloom coming out of the pre-finish rolling is 950-1000 °C, and a temperature-compensated deformation rate factor of the rolled bloom of the final pass of pre-finish rolling is (1.1-2.6)*10¹³ s⁻¹; and a temperature of a rolled bloom entering the finish rolling is 880-960 °C, and a temperature-compensated deformation rate factor of the rolled bloom of the final pass of finish rolling is (1.6-3.2)*10¹⁴ s⁻¹; and a temperature of a rolled bloom entering the dual-module rolling is 890~940 °C, and a temperature-compensated deformation rate factor of the rolled bloom of the final pass of dual-module rolling is (4.5-9.9)*10¹⁴ s¹.

7. The manufacturing method according to claim 3, wherein in step (3), a wire rod spinning temperature is 910-940 °C.

8. A fine steel wire manufactured by using the wire rod according to any one of claims 1 to 2.

9. A method for manufacturing the fine steel wire according to claim 8, comprising the following steps of:
a. mechanical descaling: performing mechanical descaling treatment to the wire rod, wherein a residual rate of iron oxide scale on a surface of the wire rod is less than or equal to 0.07%;
b. wire rod drawing: drawing the wire rod into an intermediate wire with a diameter of 0.8 -1.2 mm through multiple passes;
c. intermediate wire heat treatment: heating the intermediate wire to 880-915 °C, and then cooling the intermediate wire to 555-575 °C for phase transformation; and
d. steel wire drawing: drawing the intermediate wire after heat treatment into a steel wire with a diameter of 0.15 -0.20 mm.

10. A fine cord manufactured by using the fine steel wire according to claim 8.
